# EUROPEAN PATENT SPECIFICATION

(11) **EP 2 366 876 B1**
(45) Date of publication and mention of the grant of the patent: **20.02.2019**
(21) Application number: 11250285.1
(22) Date of filing: 10.03.2011
(51) Int. Cl.: F01N 3/00, C04B 41/00

(54) **Outer periphery-coated honeycomb structure and process for production thereof**
Wabenstruktur mit beschichteter äußerer Peripherie und Herstellungsverfahren dafür
Structure en nid d'abeille à revêtement périphérique extérieur et son procédé de production

(30) Priority: 12.03.2010 JP 2010055704; 03.03.2011 JP 2011046377
(43) Date of publication of application: 21.09.2011
(73) Proprietor: NGK Insulators, Ltd., Nagoya-City, Aichi Pref. 467-8530 (JP)
(72) Inventor: Okumura, Jun, Nagoya City Aichi-ken, 467-8530 (JP); Kodama, Suguru, Nagoya City Aichi-ken, 467-8530 (JP)
(74) Representative: Mewburn Ellis LLP

(56) References cited:
- EP-A1- 1 493 724
- EP-A1- 1 813 339
- EP-A1- 1 967 380
- WO-A1-99/28690
- US-A1- 2005 100 486

## Description

### [Technical Field]

The present invention relates to an outer periphery-coated honeycomb structure and a process for producing such an outer periphery-coated honeycomb structure. Described herein is an outer periphery-coating material for honeycomb structure, which produces a satisfactory color upon irradiation with a laser; an outer periphery-coated honeycomb structure having an outer-peripheral coating layer formed with such an outer periphery-coating material, which enables laser marking on the outer surface; and a process for producing such an outer periphery-coated honeycomb structure.

### [Background Art]

A honeycomb structure made of a ceramic has been used as a catalyst carrier for loading thereon a catalyst for eliminating the nitrogen oxides (NOx), carbon monoxide (CO), hydrocarbons (HC, hydrocarbon), etc. contained in an exhaust gas emitted from an automobile, or as a filter for capturing the fine particles, particularly diesel fine particles contained in an exhaust gas.

Such a honeycomb structure has a honeycomb-shaped cell structure made of a porous material having a plurality of cells which function as a fluid passage. A catalyst can be loaded on the honeycomb structure by impregnating the insides of the plurality of cells (the partition walls forming the plurality of cells) constituting the cell structure, with a catalyst solution, followed by drying and baking, and the resulting honeycomb structure can be used as a catalyst body.

As to such a honeycomb structure, there are disclosed, in order to, for example, improve the resistance to thermal shock, techniques of coating an outer periphery-coating material on the outer surface to form an outer-peripheral coating layer (see, for example, Patent Documents 1 to 6).

In, for example, Patent Documents 1 and 2, there is proposed a technique of using an outer periphery-coating material having a thermal expansion coefficient smaller than that of cell substrate. In Patent Document 3, there is proposed a technique of making smaller the porosity of outer periphery-coating material in its outer side of thickness direction than in the inner side. Incidentally, in this Patent Document 3, there is also disclosed a technique of forming an outer-peripheral coating layer resistant to cracking in force-drying, by controlling the grain size and water content in slurry of outer periphery-coating material. In Patent Documents 4 to 6, there is proposed a technique of improving the bonding between cell substrate and outer periphery-coating material, mainly for higher thermal shock resistance.

In recent years, honeycomb structures have come to have various characteristics according to their use purposes and use patterns; therefore, it has become difficult to ascertain the characteristics of each honeycomb structure from its appearance alone. Hence, it has become highly necessary to print various product information on, for example, the outer surface of honeycomb structure to utilize the information in order to control the steps up to mounting of honeycomb structure on automobile. For example, it is proposed, in conventional honeycomb structures, to print various product information on the side with an ink or conduct physical stamping on the outer-peripheral coating layer. There is also proposed a method for information indication using a marking composition containing a particular inorganic pigment and a titanium ceramic resin (see, for example, Patent Document 7).

### [Prior Technical Documents]

### [Patent Documents]

Patent Document 1: JP-A-2004-75523
Patent Document 2: JP-A-2004-75524
Patent Document 3: JP-A-2006-298745
Patent Document 4: JP-A-5-269388
Patent Document 5: JP-A-2004-231506
Patent Document 6: JP-A-2005-87805
Patent Document 7: WO 07/72694 Pamphlet

EP 1 813 339 A1 describes a coating layer arranged on the entire outer surface of a honeycomb ceramic structure. The coating layer is said to prevent leakage of exhaust gas from an outer portion of the honeycomb ceramic structure and further is said to prevent displacement of the honeycomb structure in a casing. The coating layer contains a molten inorganic oxide as a main component.

EP 1 493 724 A1 describes a porous material comprising: a connected structure formed by combining silicon carbide which is an aggregate with cordierite which is a combining material in a state to hold a large number of pores, and having a porosity of 52 to 70% and a median pore diameter of 15 to 30 µm.

WO 99/28690 A describes the use of ceramic materials containing a crystalline phase generically defined as "oxide" and consisting of at least one metal, one semi-metal or one non-metal such as phosphorus, arsenic, carbon and selenium bonded chemically to oxygen, and represented for example by silicates such as mullite and/or cordierite, and a phase defined as "non-oxide" and consisting of compounds of the type comprising carbides and/or nitrides of metallic and/or semi-metallic elements, and/or of metals such as aluminium and nickel and/or metal alloys such as nickel, cobalt or aluminium alloys, and/or steels. Such oxide/non-oxide ceramic materials containing the oxide and non-oxide phases in predetermined proportion are used for manufacturing ceramic products such as refractory ceramic rollers and other extruded supports for industrial firing kilns. Also described are refractory ceramic rollers and other extruded refractory supports produced using the oxide/non-oxide ceramic material, along with the process for their preparation.

### [Summary of the Invention]

### [Problems to be solved by the Invention]

However, in the above-mentioned printing with an ink, there was a problem that the printing undergoes abrasion in, for example, the handling of honeycomb structure after shipment and the important information becomes unreadable. Also, in the method of conducting stamping on the outer-peripheral coating layer of honeycomb structure, there were problems that much labor is needed in the stamping, the stamping may cause breakage of honeycomb structure, and, in such stamping, reading by color is impossible, making extremely difficult the reading of stamped portion.

The honeycomb structures after the above-mentioned printing, etc. undergo catalyst coating, chemical treatment and heat treatment of canning, etc. and then are mounted on automobiles. Therefore, it is desired to develop a method for conducting printing (marking) which is resistant to the above-mentioned abrasion and which is not deteriorated by the chemical treatment, heat treatment, etc.

As the printing method which is resistant to chemical treatment and heat treatment, there can be mentioned, for example, a laser marking method of conducting printing by applying a laser on a product. However, in this laser marking method, there have been a problem that no sufficient color development is obtained with a conventional outer periphery-coating material for honeycomb structure, and a problem that, when the outer periphery-coating material per se is black, the distinguishment between printing by laser masking and coating layer is extremely difficult.

Also, in, for example, the marking composition of the cited Document 7, there is required a prior step of coating a marking composition on a to-be-marked portion and, accordingly, there has been a problem of increased production cost, i.e. increased cost associated with conduction of laser marking. Further, since this marking composition is extremely fragile and has low adhesivity, there has been a problem that the partial detachment of marking composition takes place easily and the marking of detached portion is impossible to read. Furthermore, such a marking composition is coated on the outer wall of honeycomb structure in a certain thickness; the coated honeycomb structure, when mounted on a vehicle, need be held in a case in a state compressed uniformly from the outer wall side; therefore, unless the marking composition is coated in a sufficiently small thickness, a stress is concentrated at the end of the coating and there may occur the breakage of, for example, the honeycomb structure or the case; moreover, since the marking composition need be coated in a small thickness, the fragility and low adhesivity of marking composition may be aggravated.

The present invention has been made in view of the above-mentioned problems of prior art. Described herein are an outer periphery-coating material for honeycomb structure, which produces a satisfactory color upon irradiation with a laser; an outer periphery-coated honeycomb structure having an outer-peripheral coating layer formed with such an outer periphery-coating material, which enables laser marking on the outer surface; and a process for producing such an outer periphery-coated honeycomb structure.

### [Means to solve the problem]

The present inventors made a study in order to achieve the above-mentioned problem. As a result, it was found that, when there are mixed, at given proportions, a powder of cordierite or the like producing no color with a laser and a powder containing at least one member selected from the group consisting of a metal and a metal compound both producing a color which differs from the original color with a laser and they are used as a filler for outer periphery-coating material, a satisfactory color is developed with a laser and, moreover, color contrast between color-developed portion and portion of no color development is excellent. The finding has led to the completion of the present invention. Specifically explaining, the present invention is an outer periphery-coated honeycomb structure as set out in the appended claim 1 and a process for production thereof as set out in the appended claim 8.

### [Effect of the Invention]

When the outer periphery-coating material described herein is coated on the outer surface of a honeycomb structure to form an outer-peripheral coating layer thereon, the coating layer enables satisfactory color development (marking) with a laser; in that case, the color contrast between color-developed portion and portion of no color development is excellent. Further, the outer periphery-coated honeycomb structure of the present invention has an outer-peripheral coating layer formed with the outer periphery-coating material and enables satisfactory laser marking on the outer surface. Furthermore, the present process for production of outer periphery-coated honeycomb structure enables easy production of the outer periphery-coated honeycomb structure of the present invention.

### [Brief Description of the Drawing]

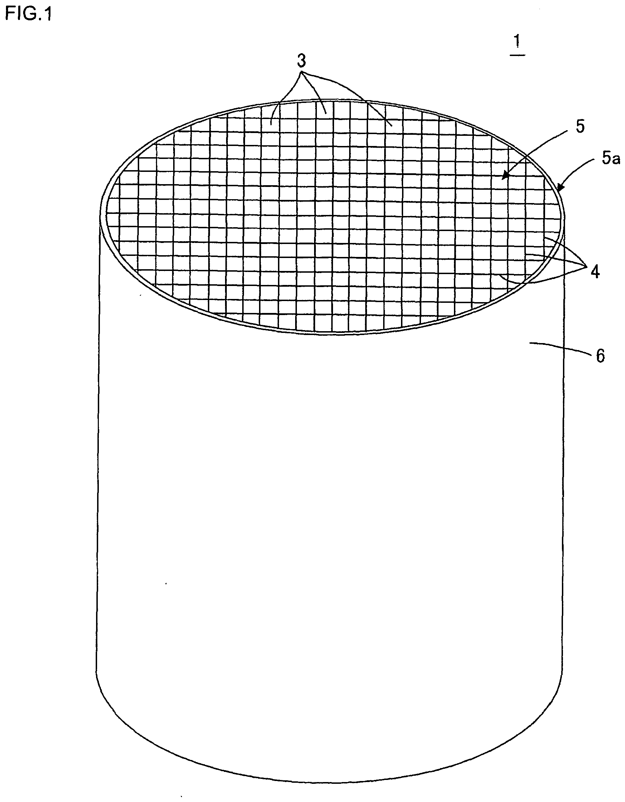

Fig. 1 is a perspective view schematically showing an embodiment of the outer periphery-coated honeycomb structure of the present invention.

### [Mode for carrying Out the Invention]

Below are specifically described modes for carrying out the outer periphery-coating material, outer periphery-coated honeycomb structure and process for production thereof.

### [1] Outer periphery-coating material

First, description is made specifically on an outer periphery-coating material. The outer periphery-coating material contains a filler containing a laser-coloring powder containing at least one member selected from the group consisting of a metal and a metal compound each developing a color which differs from the original color when irradiated with a laser, and a ceramic powder composed of a ceramic other than the material which constitutes the laser-coloring powder (in other words, the ceramic powder composed of a ceramic other than the metal or the metal compound used as the laser-coloring powder), and a dispersing medium. The filler of this outer periphery-coating material contains the laser-coloring powder in an amount of 20 to 400 parts by mass relative to 100 parts by mass of the ceramic powder. The outer periphery-coating material is used for coating of the outer surface of a honeycomb structure to form an outer-peripheral coating layer thereon.

When the outer periphery-coating material is coated on the outer surface of a honeycomb structure to form an outer-peripheral coating layer thereon, the coating layer can develop a satisfactory color (marking) with a laser, and the color contrast between color-developed portion and portion of no color development is excellent. That is, the above-mentioned laser-coloring powder, when irradiated with a laser, causes agglomeration and develops a color without losing diffused reflection. For example, silicon carbide used as a laser-coloring powder causes color development so as to produce a black to green dark color. Meanwhile, the ceramic powder composed of a ceramic other than the material which constitutes the laser-coloring powder, specifically a ceramic powder composed of cordierite or the like produces no color even when irradiated with a laser. In the outer periphery-coating material, such a laser-coloring powder and a ceramic powder composed of cordierite or the like are mixed at given proportions and are used as a filler; the metal or metal compound contained in the laser-coloring powder causes color development and the irradiated portion (i.e. marking portion) can be identified sufficiently; the ceramic powder inherently having a whitish color becomes a ground color of the coating layer made of the outer periphery-coating material and, therefore, a high color contrast can be obtained between the marking portion formed by color development of the laser-coloring powder and the non-irradiated portion. Incidentally, the "filler" means a loading material for constituting the major portion of the "outer-peripheral coating layer" formed by the outer periphery-coating material.

In conventional outer periphery-coating materials, a filler containing only the same oxide as that of substrate (i.e. honeycomb structure) is used in view of the difference in thermal expansion coefficient between the filler and the substrate. In, for example, an outer periphery-coating material used for a honeycomb structure of cordierite substrate, there has been used a filler using a cordierite powder. With an outer periphery-coating material using such a cordierite powder, the outer-peripheral coating layer made thereof is constituted by an aggregate of fine ceramic particles of indeterminate shape; therefore, when the outer-peripheral coating layer is irradiated with a laser, the particles in outer periphery-coating material (outer-peripheral coating layer) are heated and cause agglomeration, resulting in volume contraction, but no color development by laser takes place. For example, the above-mentioned agglomeration causes depression of irradiated portion, the permeability of visible light increases slightly, and a small difference in color between the irradiated portion and the non-irradiated portion arises; however, the color contrast between the irradiated portion and the non-irradiated portion is extremely low, making extremely difficult the reading of printing (marking).

Further, when silicon carbide alone is used as a filler in the outer periphery-coating material, a dark color is developed by laser irradiation; however, since the silicon carbide per se has a color close to black color, the contrast between the irradiated portion and the non-irradiated portion is low, making extremely difficult the reading of printing (marking) in this case as well.

The outer peripheral-coating material contains a laser-coloring powder containing at least one member selected from the group consisting of a metal and a metal compound each developing a color which differs from the original color with a laser, in an amount of 20 to 400 parts by mass relative to 100 parts by mass of a ceramic powder, in order to obtain a satisfactory contrast when the laser-coating powder develops a color. For example, when the amount of the laser-coloring powder is smaller than 20 parts by mass, the amount if the laser-coloring powder necessary for development of a color with a laser is too small, making impossible sufficient color development; when the amount of the laser-coloring powder exceeds 400 parts by mass, the difference in thermal expansion coefficient between the outer-peripheral coating layer and the substrate is large, resulting in lower thermal shock resistance.

The amount of the laser-coloring powder is preferably 50 to 200 parts by mass, more preferably 100 to 200 parts by mass relative to 100 parts by mass of the ceramic powder. By using such a constitution, the contrast between the irradiated portion and the non-irradiated portion can be made satisfactory.

The laser-coloring powder used in the outer peripheral-coating material preferably develops a black color with a laser. When the laser-coloring powder is used, a color development excellent in contrast is realized.

Incidentally, "develops a black color with a laser" means that the area in which the above-mentioned metal or metal compound constituting the laser-coloring powder is present, develops a color so as to give a lightness of 0 to 60% when the metal or metal compound is irradiated with a laser (i.e. an infrared laser) emitted from a laser marking light source spectrum containing a light of infrared wavelength region. That is, "develops a black color" means not only the development of complete achromatic black color but also development of a close-to-black color (a dark color) which has a lightness of 0 to 60% and has good contrast against the non-irradiated portion. Therefore, examples of the laser-coloring powder include a power developing a color of a region where the laser-coloring powder exists into a color having a lightness of 0 to 60% when irradiated with a laser. Incidentally, the above-mentioned infrared laser is a reference laser used for measurement of lightness and does not restrict the kind of the laser used for irradiation of the outer periphery-coating material of the present embodiment.

In the present Specification, "printing" by laser means not only printing of letters but also indication of marks (other than letters) of identification information, etc., such as figures, symbols, patterns, bar codes and the like.

As the laser-coloring powder which develops a color with a laser, used in the outer periphery-coating material, there can be preferably used, for example, a powder containing particles of at least one kind of metal or metal compound selected from the group consisting of silicon carbide, silicon, titania and aluminum titanate. Silicon carbide, in particular, is used more preferably for the heat resistance. The average particle diameter of the laser-coloring powder (i.e. the average particle diameter of "the powder of a metal or metal compound which develops a color with a laser", constituting the laser-coloring powder) is preferably 1.0 to 50 µm, more preferably 1.5 to 20 µm, in order for the outer-peripheral coating layer formed to have a required strength. A powder composed of particles of such a metal or metal compound develops a satisfactory color when irradiated with a laser. Incidentally, the average particle diameter is a value obtained by a volume-based particle size distribution measurement using a laser diffraction/scattering method. Such an average particle diameter can be measured using, for example, a laser diffraction/scattering type particle size distribution tester "LA-920 (trade name)", a product of HORIBA, Ltd.

Meanwhile, as the ceramic powder composed of a ceramic other than the material which constitutes the laser-coloring powder (in other words, a ceramic other than the above-mentioned metal or metal compound which produces a color which differs from original color with a laser), there can be used a powder containing particles of at least one kind of ceramic selected from the group consisting of cordierite, silicon nitride, alumina, mullite, zirconia and zirconium phosphate. Such a ceramic powder is preferred to be appropriately selected so as to match, for example, the material of the honeycomb structure on which an outer-peripheral coating layer is to be formed.

The outer periphery-coating material is constituted in a slurry state in which the above-mentioned filler (composed of a laser-coloring powder and a ceramic powder) is dispersed by a dispersing medium.

The dispersing medium used in the outer periphery-coating material may be a liquid capable of dispersing the above-mentioned filler, and water can be used preferably.

As to the amount of the dispersing medium, there is no particular restriction. There is preferred such an amount as to provide an outer periphery-coating material having sufficient coatability and viscosity when coated on the outer surface of a honeycomb structure (a carrier) to form an outer-peripheral coating layer. Specifically the amount of the dispersing medium used is preferably 15 to 30 parts by mass, more preferably 20 to 25 parts by mass per 100 parts by mass or the total of the laser-coloring powder and the ceramic powder both used in the outer periphery-coating material.

The outer periphery-coating material may further contain colloidal silica as an inorganic binder. The colloidal silica functions as an adhesive of the outer periphery-coating material and, when the outer periphery-coating material is coated on the outer periphery of a honeycomb structure to form an outer-peripheral coating layer, can provide good adhesivity between the outer-peripheral coating layer and the honeycomb structure.

The amount of the colloidal silica used is preferably 20 to 35 parts by mass, more preferably 25 to 30 parts by mass relative to 100 parts by mass of the total of the laser-coloring powder and the ceramic powder. By using such a constitution, the coatability and viscosity in coating of outer periphery-coating material can be made good and, moreover, the outer-peripheral coating layer formed can be adhered firmly to a honeycomb structure so that the outer-peripheral coating layer is not peeled from the honeycomb structure by shock, etc.

The average particle diameter of the colloidal silica, in terms of the average particle diameter of the silica particles dispersed is preferably, for example, 10 to 30 nm, more preferably 15 to 25 nm.

The outer periphery-coating material may furthermore contain an organic binder, a clay, etc. As the organic binder, there can be mentioned, for example, methyl cellulose (hereinafter referred to as "MC"), carboxymethyl cellulose (hereinafter referred to as "CMC") and a bio-polymer. As the clay, there can be mentioned bentonite and montmorillonite.

The outer periphery-coating material can be produced in a slurry state or a paste state by mixing the above-mentioned laser-coloring powder and ceramic powder as a filler and, as necessary, the above-mentioned colloidal silica and other additives, with a dispersing medium.

The outer periphery-coating material is produced so as to have a viscosity of preferably 100 to 300 dPa·s, more preferably 150 to 250 dPa·s, particularly preferably 180 to 220 dPa·s. By using such a constitution, the coating of the outer periphery-coating material on the outer surface of a honeycomb structure is easy. When the viscosity of the outer periphery-coating material is lower than 100 dPa·s, the outer periphery-coating material has too high fluidity and flows when coated, which may make difficult the formation of an outer-peripheral coating layer having a sufficient thickness. In particular, when the outer-peripheral coating layer is thin, the color developed by irradiation with a laser may be thin. Meanwhile, when the viscosity of the outer periphery-coating material exceeds 300 dPa·s, the fluidity and wettability of the outer periphery-coating material are deteriorated, which may make low the coatability. Further, the outer-peripheral coating layer formed may easily generate inconveniences such as cracks, peeling and the like.

Such an outer periphery-coating material, when coated on at least part of the outer surface of a honeycomb structure and dried or fired after drying, can form an outer-peripheral coating layer mainly constituted by the above-mentioned color-developing powder and ceramic powder.

### [2] Outer periphery-coated honeycomb structure

Next, description is made in depth on en embodiment of the outer periphery-coated honeycomb structure of the present invention. As shown in Fig. 1, the outer periphery-coated honeycomb structure 1 of the present embodiment has
a honeycomb structure 5 having porous partition walls 4 forming a plurality of divided cells 3, and
a an outer-peripheral coating layer 6 formed by coating the outer periphery-coating material of the present invention on at least part of the outer surface 5a of the honeycomb structure 5.

In the outer periphery-coated honeycomb structure 1 of the present embodiment, when laser printing is made on the surface of the outer-peripheral coating layer 6, the laser-coloring powder contained in the outer periphery-coating material develops a color which differs from the original color (for example, a dark color), producing a high contrast between the color-developed printing (marking) portion and the non-irradiated portion of the outer-peripheral coating layer 6. This printing portion does not become unreadable even when the surface thereof undergoes slight abrasion, and further is resistance to chemical treatment or heat treatment. Therefore, even when the outer periphery-coated honeycomb structure has a catalyst coated thereon or has been subjected to canning, the printing formed with a laser is not deteriorated and can still be read.

Thus, the outer periphery-coated honeycomb structure of the present embodiment can be preferably used in a form in which markings (printings) such as identification information, etc. (e.g. letters, figures, symbols, patterns and bar codes) are made with a laser on the outer-peripheral coating layer..

Fig. 1 is a perspective view schematically showing an embodiment of the outer periphery-coated honeycomb structure of the present invention. Incidentally, the outer periphery-coated honeycomb structure shown in Fig. 1 is a case in which an outer-peripheral coating layer is formed by coating an outer periphery-coating material on the whole part of the outer surface 5a of a honeycomb structure 5. However, the outer-peripheral coating layer made of the outer periphery-coating material may be formed, for example, on part of a honeycomb structure by coating the outer periphery-coating material on part of the outer surface of the honeycomb structure. When an outer-peripheral coating layer is formed on part of the outer surface of a honeycomb structure, it is preferred to form an outer-peripheral coating layer made of the outer periphery-coating material, on the portion of the honeycomb structure where product information or information for identification is to be printed.

As to the thickness of the outer-peripheral coating layer, there is no particular restriction. However, the thickness is, for example, preferably 0.05 to 0.8 mm, more preferably 0.1 to 0.5 mm, particularly preferably 0.2 to 0.4 mm. With a thickness of the outer-peripheral coating layer of smaller than 0.05 mm, the outer-peripheral coating layer is too thin, which may invite a low mechanical strength of outer periphery-coated honeycomb structure; when laser printing (marking) is made, the amount of the laser-coloring powder (i.e. the amount of the powder of a metal or metal compound developing a color with a laser) in the outer-peripheral coating layer is small, which may not develop a clear color on the printing portion. With a thickness of the outer-peripheral coating layer exceeding 0.8 mm, the outer-peripheral coating layer is too thick and there is, for example, a problem that the size of outer periphery-coated honeycomb structure may be too large as compared with the size of honeycomb structure which functions substantially as a filtration layer or a catalyst carrier.

The outer-peripheral coating layer has a thermal expansion coefficient at 800°C, of preferably 0.8∼3.2x10⁻⁶/K, more preferably 0.8∼2.8x10⁻⁶/K, particularly preferably 0.8∼2.3x10⁻⁶/K. By using such a constitution, the outer-peripheral coating layer has good thermal shock resistance. For example, with a thermal expansion coefficient at 800°C, of 3.2x10⁻⁶/K or smaller, the difference in thermal expansion coefficient between the outer-peripheral coating layer and the substrate is small, causing no problem under ordinary use conditions; however, with a thermal expansion coefficient at 800°C, exceeding 3.2x10⁻⁶/K, the difference in thermal expansion coefficient between the outer-peripheral coating layer and the substrate is too large, generating the peeling and breakage of outer-peripheral coating layer caused by thermal shock.

As shown in Fig. 1, the honeycomb structure 5 used in the outer periphery-coated honeycomb structure 1 of the present embodiment has porous partition walls 4 forming a plurality of divided cells 3. As to the material of the honeycomb structure, there is no particular restriction. However, since the honeycomb structure need be a porous material having a large number of pores, there is ordinarily used preferably, as the material for the honeycomb structure, a sintered body made of a ceramic such as cordierite, silicon carbide, silicon nitride, alumina, mullite, zirconia, zirconium phosphate, aluminum titanate, titania or the like; in particular, a sintered body made of cordierite. The sintered body made of cordierite has a small thermal expansion coefficient and is preferred in view of the excellent thermal shock resistance and mechanical strength.

As to the cell shape of the honeycomb structure, there is no particular restriction. However, the cell shape is preferably a polygon (e.g. triangle, tetragon, pentagon, hexagon or octagon), a circle, or an oval, in a section of honeycomb structure intersecting with the central axis at right angles. The cell shape may be an indeterminate shape.

As to the external shape of the honeycomb structure, there is no particular restriction. However, there can be mentioned, as the external shape, a cylinder, an elliptic cylinder, a prism having a polygonal (e.g. tetragonal) bottom, a column having an indeterminate bottom, etc. There is no particular restriction, either, as to the size of the honeycomb structure. However, the length in the central axis direction of the honeycomb structure is preferably 40 to 500 mm. Also, for example, when the external shape of the honeycomb structure is a cylinder, the bottom radius is preferably 50 to 500 mm.

The partition wall thickness of the honeycomb structure is preferably 0.20 to 0.50 mm and, from the easiness of production, more preferably 0.25 to 0.45 mm. For example, when the thickness is smaller than 0.20 mm, the strength of the outer periphery-coated honeycomb structure formed may be low; when the thickness is lager than 0.50 mm, the pressure loss when the outer periphery-coated honeycomb structure is used as a filter, may be large. Incidentally, the partition wall thickness is an average when measured according to a method of microscopic observation of the vertical direction section of the honeycomb structure.

The porosity of the partition walls constituting the honeycomb structure is preferably 30 to 70% and, from the easiness of production, more preferably 40 to 60%. When the porosity is smaller than 30%, the pressure loss may be larger; when the porosity is larger than 70%, the honeycomb structure is fragile and may break easily.

The average pore diameter of the porous partition walls is preferably 5 to 30 µm, more preferably 10 to 25 pm. With an average pore diameter of smaller than 5 µm, the pressure loss may be larger when the honeycomb structure is used as a filter and even when the accumulation of particulate matter is small. With an average pore diameter of larger than 30 µm, the honeycomb structure is fragile and may break easily. Incidentally, in the present Specification, "average pore diameter" and "porosity" mean an average pore diameter and a porosity both measured by the mercury porosimetry.

As to the cell density of the honeycomb structure, there is no particular restriction, either. However, the cell density is preferably 47 to 140 cells/cm², more preferably 47 to 93 cells/cm².

Such a honeycomb structure is produced by forming a kneaded clay containing a ceramic raw material, into a honeycomb formed body having partition walls forming a plurality of divided cells which extend from one end face of the honeycomb formed body to other end face and function as a fluid passage, and drying and then firing the honeycomb formed body. When this honeycomb structure is used as an outer periphery-coated honeycomb structure of the present embodiment, the honeycomb formed body per se or the honeycomb structure after firing is ground at the periphery into a desired shape; the periphery-ground honeycomb structure is coated with the above-mentioned outer periphery-coating material to form an outer-peripheral coating layer. Incidentally, in the outer periphery-coated honeycomb structure of the present embodiment, the outer-peripheral coating layer may be formed, for example, by using a honeycomb structure having a periphery (without grinding the periphery) and coating the above-mentioned outer periphery-coating material on the outer surface of the honeycomb structure having a periphery, i.e. outside the periphery of the honeycomb structure. That is, in the former case, only an outer-peripheral coating layer composed of the outer periphery-coating material is present on the outer surface of the outer periphery-coated honeycomb structure; meanwhile, in the latter case, there is formed an outer wall of double-layer structure, in which an outer-peripheral coating layer composed of the outer periphery-coating material is layered on the outer surface of a honeycomb structure.

Incidentally, the honeycomb structure is not restricted to a one-piece honeycomb structure in which partition walls are formed integrally with the outer wall and may also be, for example, a honeycomb structure (not shown) in which several columnar honeycomb segments each having porous partition walls forming a plurality of divided cells which function as a fluid passage, are combined via a bonding material layer (hereinafter, this honeycomb structure is referred to as "bonded honeycomb structure", in some cases).

The honeycomb structure may also have such a structure that, of a plurality of cells, predetermined cells have plugged portions at their one open ends and remaining cells have plugged portions at other open ends. Such a honeycomb structure can be used as a filter (a honeycomb filter) for purification of exhaust gas. The plugged portions may be formed after formation of an outer-peripheral coating layer, or before formation of an outer-peripheral coating layer, i.e. at the stage of honeycomb structure production.

The plugged portions may have the same constitution as in conventional known honeycomb structures.

In the honeycomb structure used for the outer periphery-coated honeycomb structure of the present embodiment, a catalyst may be loaded on at least either of the partition walls and the pore insides of partition walls. Thus, the outer periphery-coated honeycomb structure of the present embodiment may be a catalyst-loaded catalyst body, or a catalyst-loaded filter [e.g. a diesel particulate filter (hereinafter, referred to as "DPF")] having a catalyst for exhaust gas purification loaded thereon.

As to the kind of the catalyst, there is no particular restriction. The catalyst can be selected appropriately depending upon the use purpose and application of outer periphery-coated honeycomb structure. For example, when the outer periphery-coated honeycomb structure is used as a DPF, there can be mentioned, as the kind of the catalyst, an oxidation catalyst for oxidizing and removing the soot, etc. contained in an exhaust gas; an NOx selective reduction catalyst (SCR) or an NOx occlusion and reduction catalyst, for removing the harmful components (e.g. NOx) contained in an exhaust gas; and so forth. Incidentally, as to the method for catalyst loading, there is no particular restriction, either; and the loading can be conducted according to the conventional method for catalyst loading on honeycomb structure.

### [3] Process for production of outer periphery-coated honeycomb structure

Next, description is made on an embodiment of the process for producing the outer periphery-coated honeycomb structure of the present invention. The process for producing the outer periphery-coated honeycomb structure of the present embodiment comprises steps of coating the above-mentioned outer periphery-coating material on the outer surface of a honeycomb structure having porous partition walls forming a plurality of divided cells, and drying the coated outer periphery-coating material to form an outer-peripheral coating layer.

By employing such a constitution, there can be easily produced such an outer periphery-coated honeycomb structure that, when printing is made on the outer surface with a laser, the printing is excellent in contrast between the color-developed printing (marking) portion and the laser-non-irradiated portion of peripheral portion (i.e. outer-peripheral coating layer). Below is described, in more depth, each step of the process for production of the outer periphery-coated honeycomb structure of the present embodiment.

### [3-1] Production of honeycomb structure

In the process for producing an outer-coated honeycomb structure, of the present embodiment, first, there is produced a honeycomb structure having porous partition walls forming a plurality of divided cells. For example, when a honeycomb structure made of cordierite is produced, first, raw materials for formation of honeycomb formed body, such as talc, kaolin, alumina, silica and the like are prepared at given proportions so that they become cordierite after firing; water is added thereto; they are mixed and kneaded to prepare a kneaded clay. To the kneaded clay may be added, as necessary, a binder, a surfactant, a pore former, etc.

Then, the kneaded clay is extruded through an extruder with a die, to obtain a honeycomb formed body; and the honeycomb formed body is dried.

Then, the dried honeycomb fired body is fired at a given temperature to produce a honeycomb structure having porous partition walls forming a plurality of divided cells. Incidentally, when there is produced an outer periphery-coated honeycomb structure having plugged portions at cell open ends, the formation of plugged portions may be conducted when the honeycomb formed body or the honeycomb structure has been produced.

The formation of plugged portions by plugging of cell open ends is conducted, for example, by, first, applying a mask to the open ends of part of cells at one end face of the honeycomb structure or the honeycomb formed body, and dipping the end face in a vessel storing a plugging material for formation of plugging portion, to infiltrate the plugging material into cells to which no mask is applied. Incidentally, the plugging material for formation of plugged portion can be obtained by mixing a ceramic raw material, a surfactant, water, a sintering aid, etc., adding, as necessary, a pore former for higher porosity to obtain a slurry, then kneading the slurry using a mixer or the like.

Then, at other end face of the honeycomb structure, a mask is applied to the open ends of the cells not masked at the one end face (the cells other than the above-mentioned part of cells), and dipping the other end face in the above-mentioned vessel storing a plugging material, to infiltrate the plugging material into cells to which no mask is applied, whereby plugged portions are formed.

As the method for masking cell open ends, there is no particular restriction. However, there can be mentioned, for example, a method of attaching an adhesive film to the whole part of the end face of a honeycomb structure for use as a filter and making holes at selected parts of the adhesive film. As a preferable example of such a method, there can be mentioned a method of attaching an adhesive film to the whole part of the end face of a honeycomb structure for use as a filter, and then making holes with a laser at the portions of the adhesive film, corresponding to the cells in which plugged portions are to be formed. As the adhesive film, there can be preferably used, for example, a film made of a resin (e.g. a polyester, a polyethylene or a thermosetting resin), which has an adhesive coated at one side.

When a honeycomb structure is produced in such a state that an outer wall is formed at the outer surface, it is preferable to grind the outer surface to remove the outer wall. At a later step, there is coated, on the periphery of the thus-formed honeycomb structure having no outer wall, an outer periphery-coating material to form an outer-peripheral coating layer. In grinding the outer surface, it is possible to grind and remove part of the outer wall and coat thereon an outer periphery-coating material to form an outer-peripheral coating layer.

### [3-2] Preparation of outer periphery-coating material

Separately from the above-mentioned production of honeycomb structure, an outer periphery-coating material is prepared for formation of an outer-peripheral coating layer of outer periphery-coated honeycomb structure. The outer periphery-coating material can be prepared by mixing at least a laser-coloring powder containing at least one member selected from the group consisting of a metal and a metal compound both capable of developing a color which differs from the original color with a laser as a filler, a ceramic powder composed of a ceramic other than the material which constitutes the laser-coloring powder, and a dispersing medium, so that the amounts of the filler components give the above-mentioned proportions, to obtain a slurry or a paste.

As the ceramic powder, there can be preferably used a powder composed of the same material as the above-mentioned ceramic material used as a raw material of honeycomb structure. For example, when, as mentioned above, a ceramic raw material compounded so as to become cordierite after firing is used as a raw material of honeycomb structure, a raw material prepared in the same compounding proportions can be used as the ceramic powder for outer periphery-coating material.

As the particles constituting the laser-coloring powder, there can be used, for example, silicon carbide, silicon, titania and aluminum nitride. The powder composed of particles containing such a metal or metal compound (i.e. the laser-coloring powder) is used in an amount of 20 to 400 parts by mass relative to 100 parts by mass of the ceramic powder. Thereby, satisfactory color development with a laser becomes possible.

To the ceramic powder and the laser-coloring powder is added a dispersing medium, followed by mixing, to prepare an outer periphery-coating material. For example, water can be used as the dispersing medium. The dispersing medium is used in an amount of preferably 15 to 30 parts by mass relative to 100 parts by mass of the total of the laser-coloring powder and the ceramic powder, in the outer periphery-coating material.

In preparing the outer periphery-coating material by using the above raw materials, there can be used, for example, a biaxial vertical rotary mixer.

The outer periphery-coating material may further contain colloidal silica, an organic binder, clay, etc. The organic binder is used in an amount of preferably 0.05 to 0.5 part by mass, more preferably 0.1 to 0.2 part by mass relative to 100 parts by mass of the total of the laser-coloring powder and the ceramic powder. The clay is used in an amount of preferably 0.2 to 2.0 parts by mass, more preferably 0.4 to 0.8 part by mass relative to 100 parts by mass of the total of the laser-coloring powder and the ceramic powder.

### [3-3] Formation of outer-peripheral coating layer

The outer periphery-coating material is coated on the outer surface of the previously-produced honeycomb structure, and the coated outer periphery-coating material is dried to form an outer-peripheral coating layer. By employing such constitution, there can be produced an outer periphery-coated honeycomb structure in which an outer-peripheral coating layer enabling satisfactory laser printing is formed on the outer surface of a honeycomb structure.

As the method for coating the outer periphery-coating material, there can be mentioned, for example, a method of rotating the honeycomb structure on a turn table, and pressing a coating nozzle of blade shape which blasts out an outer periphery-coating material, along the peripheral portion of the honeycomb structure to conduct coating. By employing such constitution, the outer periphery-coating material can be coated in a uniform thickness. Further, the outer-peripheral coating layer formed has a small surface roughness, is excellent in appearance, and is hardly broken by thermal shock.

When there is used a honeycomb structure whose outer surface has been ground and whose outer wall has been removed, an outer periphery-coating material is coated on the whole part of the outer surface of the honeycomb structure to form an outer-peripheral coating layer. Meanwhile, when there is used a honeycomb structure which has an outer wall at the outer surface or in which part of the outer wall has been removed, an outer periphery-coating material may be coated partially to form an outer-peripheral coating layer, or may be coated on the whole part of the outer surface of the honeycomb structure to form an outer-peripheral coating layer.

As to the method for drying the coated outer periphery-coating material (i.e. the non-dried outer-peripheral coating layer), there is no particular restriction. However, there can be preferably used, for example, a method of keeping, from the standpoint of prevention of crack generation, the coated outer periphery-coating material at room temperature for at least 24 hours to remove 25% or more of the water contained therein, and then keeping the resulting material at 600°C for at least 1 hour in an electric furnace to remove the water and organic substance contained therein.

When the honeycomb structure is not plugged at cell open ends, plugging of cell open ends may be conducted after the formation of an outer-peripheral coating layer.

In the outer periphery-coated honeycomb structure obtained, the laser-coloring powder contained in the outer periphery-coating material (i.e. the powder composed of a powder containing a metal or metal compound which develops a color which differs from the original color with a laser) develops a color when the outer surface of the honeycomb structure is irradiated with a laser. Therefore, the outer-peripheral coating layer of the outer periphery-coated honeycomb structure obtained may be irradiated with a laser to print product information, etc.

As the laser beam used in laser marking, there can be mentioned, as preferred examples, carbon dioxide (CO₂) laser, YAG laser and YVO₄ laser. The conditions for irradiation of laser beam can be appropriately selected depending upon the kind of the laser used; however, when, for example, CO₂ laser is used, marking at an output of 15 to 25 W and a scan speed of 400 to 600 mm/s is preferred. By thus conducting marking, the irradiated portion develops a dark (black to green) color and extremely good contrast is obtained between the color-developed portion and the non-irradiated portion.

In the process for production of outer periphery-coated honeycomb structure, of the present embodiment, even when a catalyst is loaded on the outer periphery-coated honeycomb structure after the above-mentioned laser printing, there is no deterioration of the printed portion and the printing can be read satisfactorily even after the catalyst loading. As to the method for catalyst loading, there is no particular restriction, and the catalyst loading can be conducted according to the same method as used in conventional production process of honeycomb structure.

### [Examples]

The present invention is described specifically below by way of Examples.

### (Production of honeycomb structure)

Cordierite raw materials were mixed so that they had a theoretical cordierite composition (2MgO·2Al₂O₃·5SiO₂) after firing. To the resulting powder were added a forming aid, a pore former and water, followed by mixing and kneading, to obtain a kneaded clay. The kneaded clay was extruded to produce a honeycomb formed body. The honeycomb body was dried and fired to produce a honeycomb structure.

The honeycomb structure was ground at the outer surface to remove the outer wall. The honeycomb structure before removal of outer wall had a diameter of 266.7 mm and a length of 304.8 mm, a columnar shape, a porosity of 59%, a partition wall thickness of 0.3 mm and a cell density of 46.5 cells/cm².

### (Example 1)

There were mixed 100 parts by mass of a powder for cordierite formation as a ceramic powder, 200 parts by mass of silicon carbide as a metal carbide powder to function as a laser-coloring powder, 76 parts by mass of colloidal silica as an inorganic binder, and water as a dispersing medium, to prepare an outer periphery-coating material. Incidentally, water was used in an amount of 22 parts by mass relative to 100 parts by mass of the total of the ceramic powder and the laser-coloring powder (the metal carbide powder) in the outer periphery-coating material. The outer periphery-coating material further contained 0.15 part by mass of an organic binder and 0.9 part by mass of a clay relative to 100 parts by mass of the total of the ceramic powder and the laser-coloring powder. The thus-constituted outer periphery-coating material had a viscosity of 200 dPa·s.

Incidentally, CMC (carboxymethyl cellulose) was used as the organic binder. Bentonite was used as the clay.

The thus-obtained outer periphery-coating material was coated on the outer surface of the above-produced honeycomb structure in a thickness of 0.3 mm; then was subjected to natural drying at room temperature (25°C) for 24 hours and heat-treated at 600°C for 1 hour in an electric furnace, to form an outer-peripheral coating layer. The outer-peripheral coating layer had a thermal expansion coefficient of 2.3x10⁻⁶/K.

On the outer surface of the thus-produced outer periphery-coated honeycomb structure was conducted laser printing of 2D bar code using a CO₂ laser marker, under the conditions of an output of 20 W and a scan speed of 500 mm/s. The thus-obtained outer periphery-coated honeycomb structure on which laser printing had been conducted, was evaluated for durability of outer-peripheral coating layer and contrast of printed portion (readability of printed bar code), according to the following methods. The results are shown in Table 1.

### (Evaluation of durability of outer-peripheral coating layer)

A thermal shock resistance test by electric furnace spalling was conducted for evaluation of the durability of outer-peripheral coating layer. In this test, a honeycomb structure is placed in an electric furnace heated at a given temperature and, after 1 hour, is taken out to confirm the peeling of outer peripheral-coating material or generation of cracks. The evaluation was made based on the following yardstick.

Good: There is no peeling of outer periphery-coating material or no generation of cracks, at a furnace-inside temperature of 400°C.

Acceptable: There is peeling of outer periphery-coating material or generation of cracks, at a furnace-inside temperature of 350°C, and there is no peeling of outer periphery-coating material or no generation of cracks, at a furnace-inside temperature of 300°C.

Unacceptable: There is peeling of outer periphery-coating material or generation of cracks, at a furnace-inside temperature of 300°C.

### (Test of readability of printed bar code)

A contrast between the printing portion (the portion which caused color development with a laser) and the non-irradiated portion was evaluated by conducting a test of readability of printed bar code using a bar code reader meeting ISO/IEC 15415. The evaluation was made according to the following yardstick. Incidentally, in the following yardstick, "readability grade" is base don the specification of ISO/IEC 15415.

Good: Contrast is good and printed portion can be read well (readability grade: A).

Acceptable: Printed portion can be read (readability grade: B to D).

Unacceptable: Contrast between printed portion and non-irradiated portion is bad and reading is difficult (readability grade: F).

**Table 1**

| | | | | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|---|---|---|
| Compounding proportions of outer periphery-coating material (parts by mass) | Filler | Ceramic powder | Cordierite | 100 | 100 | 100 | 100 | 100 | 100 | 100 | 100 | 100 |
| | | Laser-coloring powder | Silicon carbide | 100 | 200 | 50 | 20 | 400 | - | 100 | 100 | 100 |
| | | | Aluminum nitride | - | - | - | - | - | 100 | - | - | - |
| | Adhesive | Colloid (silica al silica solid content: 40%) | | 53 | 76 | 41 | 34 | 122 | 53 | 53 | 53 | 53 |
| | Dispersing medium | Water | | 44 | 66 | 33 | 26 | 110 | 44 | 44 | 44 | 44 |
| | Aid | Clay | Bentonite | 1.8 | 2.7 | 1.4 | 1.1 | 4.5 | 1.8 | 1.8 | 1.8 | 1.8 |
| | | Organic binder | CMC | 0.3 | 0.5 | 0.2 | 0.2 | 0.8 | 0.3 | 0.3 | 0.3 | 0.3 |
| Proportion of Proportion of laser-coloring powder in filler | | | | 50.0 | 66.7 | 33.3 | 16.7 | 80.0 | 50.0 | 50.0 | 50.0 | 50.0 |
| Proportion of dispersing medium (water) (relative to total filler) | | | | 22.0 | 22.0 | 22.0 | 22.0 | 22.0 | 22.0 | 22.0 | 22.0 | 22.0 |
| Outer-peripheral coating layer | Thickness (mm) | | | 0.4 | 0.4 | 0.4 | 0.4 | 0.4 | 0.4 | 0.1 | 0.3 | 0.6 |
| | Thermal expansion coefficient (10⁻⁶/K) | | | 2.3 | 2.8 | 1.8 | 1.3 | 3.2 | 2.8 | 2.3 | 2.3 | 2.3 |
| Test of readability of printed bar code | | | | Good | Good | Good | Acceptable | Good | Acceptable | Acceptable | Good | Good |
| Evaluation of heat resistance of coating material | | | | Good | Good | Good | Good | Acceptable | Good | Good | Good | Good |

**Table 2**

| | | | | Comp. Ex. 1 | Comp. Ex. 2 | Comp. Ex. 3 | Comp. Ex. 4 | Comp. Ex. 5 |
|---|---|---|---|---|---|---|---|---|
| Compounding proportions of outer periphery-coating material (parts by mass) | Filler | Ceramic powder | Cordierite | 100 | 100 | 100 | 100 | - |
| | | Laser-coloring powder | Silicon carbide | - | 15 | 700 | 450 | 100 |
| | Adhesive | Colloidal silica (silica solid content: 40%) | | 30 | 33 | 168 | 134 | 23 |
| | Dispersing medium | Water | | 22 | 25 | 176 | 121 | 22 |
| | Aid | Clay | Bentonite | 0.9 | 1.0 | 7.2 | 4.9 | 0.9 |
| | | Organic binder | CMC | 0.2 | 0.2 | 1.2 | 0.9 | 0.2 |
| Proportion of laser-coloring powder in filler | | | | 0.0 | 13.0 | 87.5 | 81.8 | 100.0 |
| Proportion of dispersing medium (water) (relative to total filler) | | | | 22.0 | 22.0 | 22.0 | 22.0 | 22.0 |
| Outer-peripheral coating layer | Thickness (mm) | | | 0.4 | 0.4 | 0.4 | 0.4 | 0.4 |
| | Thermal expansion coeff icient (10⁻⁶/K) | | | 0.8 | 1.2 | 3.8 | 3.4 | Good |
| Test of readability of printed bar code | | | | Unacceptable | Unacceptable | Good | Good | Good |
| Evaluation of heat resistance of coating material | | | | Good | Good | Unacceptable | Unacceptable | Unacceptable |

### (Examples 2 to 5)

Outer periphery-coated honeycomb structures were produced in the same manner as in Example 1 except that the amount of silicon carbide used in the outer periphery-coating material was changed as shown in Table 1. Laser printing was conducted on the outer surface of each outer periphery-coated honeycomb structure in the same manner as in Example 1, and each printed portion was evaluated for durability and tested for readability of printed bar code. The results are shown in Table 1.

### (Example 6)

An outer periphery-coated honeycomb structure was produced in the same manner as in Example 1 except that an aluminum nitride powder was used as the laser-coating powder used in the outer periphery-coating material. Laser printing was conducted on the outer surface of the outer periphery-coated honeycomb structure obtained, in the same manner as in Example 1, and the printed portion was evaluated for durability and tested for readability of printed bar code. The results are shown in Table 1.

### (Examples 7 to 9)

Outer periphery-coated honeycomb structures were produced in the same manner as in Example 1 except that the coating thickness of the outer periphery-coating material was changed as shown in Table 1. Laser printing was conducted on the outer surface of each outer periphery-coated honeycomb structure in the same manner as in Example 1, and each printed portion was evaluated for durability and tested for readability of printed bar code. The results are shown in Table 1.

### (Comparative Example 1)

An outer periphery-coated honeycomb structure was produced in the same manner as in Example 1 except that no laser-coloring powder (no metal or metal compound producing a black color with a laser) was used and only a cordierite powder was used as a raw material powder. Laser printing was conducted on the outer surface of the outer periphery-coated honeycomb structure obtained, in the same manner as in Example 1, and the printed portion was evaluated for durability and tested for readability of printed bar code. The results are shown in Table 2.

### (Comparative Examples 2 to 4)

Outer periphery-coated honeycomb structures were produced in the same manner as in Example 1 except that the amount of the silicon carbide used in the outer periphery-coating material was changed as shown in Table 2. Laser printing was conducted on the outer surface of each outer periphery-coated honeycomb structure obtained, in the same manner as in Example 1, and the printed portion was evaluated for durability and tested for readability of printed bar code. The results are shown in Table 2.

### (Comparative Example 5)

An outer periphery-coated honeycomb structure was produced in the same manner as in Example 1 except that no cordierite powder was used and a silicon carbide powder producing a black color with a laser was used as the laser-coloring powder. Incidentally, the amount of the laser-coloring powder was such an amount as corresponding to 100 parts by mass of the cordierite powder used in Example 1. Laser printing was conducted on the outer surface of the outer periphery-coated honeycomb structure obtained, in the same manner as in Example 1, and the printed portion was evaluated for durability and tested for readability of printed bar code. The results are shown in Table 2.

### (Results)

In the outer periphery-coated honeycomb structures of Examples 1 to 9, each printed portion was readable in the test of readability of printed bar code [readability grade: A to C (evaluation: good or acceptable)]. In the durability evaluation, each printed portion gave a good result (evaluation: good or acceptable).

Meanwhile, in the outer periphery-coated honeycomb structures of Comparative Examples 1 and 2, the amount of the laser-coloring powder was zero or too small and, therefore, each printed portion was unreadable.

In the Comparative Examples 3 to 5, the amount of laser-coloring powder was large as compared with the amount of ceramic powder and, therefore, the difference in thermal expansion coefficient between the substrate and the outer periphery-coating material was too large, which caused peeling of outer periphery-coating material in the spalling test in electric furnace.

### [Industrial Applicability]

The outer periphery-coating material, when coated on the outer surface of a honeycomb structure, can form an outer-peripheral coating layer. The outer periphery-coated honeycomb structure of the present invention can be preferably used, for example, as a catalyst carrier for loading a catalyst for purifying an exhaust gas emitted from an automobile or the like, or as a filter for capturing the fine particles contained in an exhaust gas. The process for producing an outer periphery-coated honeycomb structure, according to the present invention can easily produce the above-mentioned outer periphery-coated honeycomb structure of the present invention.

### [Explanation of Numerical Symbols]

1: an outer periphery-coated honeycomb structure; 2: an outer-peripheral coating layer; 3: a cell; 4: a partition wall; 5: a honeycomb structure; 5a: an outer surface (an outer surface of honeycomb structure; 6: an outer-peripheral coating layer

## Claims

1. An outer periphery-coated honeycomb structure (1) comprising
a honeycomb structure (5) having porous partition walls (4) forming a plurality of divided cells (3), and
an outer-peripheral coating layer (6) formed by coating an outer periphery-coating material on at least part of the outer surface (5a) of the honeycomb structure (5) ;
the outer periphery-coating material containing
a filler containing a laser-coloring powder containing at least one member selected from the group consisting of a metal and a metal compound each developing a color which differs from the original color when irradiated with a laser, and a ceramic powder composed of a ceramic other than the material which constitutes the laser-coloring powder, wherein the ceramic powder is a powder containing particles of at least one kind of ceramic selected from the group consisting of cordierite, silicon nitride, alumina, mullite, zirconia and zirconium phosphate, and
a dispersing medium,
the filler containing the laser-coloring powder in an amount of 20 to 400 parts by mass relative to 100 parts by mass of the ceramic powder;
the outer periphery-coated honeycomb structure (1) having a marking formed with a laser on the surface of the outer-peripheral coating layer (6).

2. The outer periphery-coated honeycomb structure (1) according to Claim 1, wherein the laser-coloring powder is a powder developing a black color when irradiated with a laser.

3. The outer periphery-coated honeycomb structure (1) according to Claim 1 or 2, wherein the laser-coloring powder is a powder for which the color of a region where the laser-coloring powder exists develops into a color having a lightness of 0 to 60% when irradiated with a laser.

4. The outer periphery-coated honeycomb structure (1) according to any one of Claims 1 to 3, wherein the laser-coloring powder is a powder containing particles containing at least one member selected from the group consisting of silicon carbide, silicon, titania and aluminum nitride.

5. The outer periphery-coated honeycomb structure (1) according to any one of Claims 1 to 4, which contains colloidal silica as an inorganic binder.

6. An outer periphery-coated honeycomb structure (1) according to any one of Claims 1 to 5, wherein the laser-coloring powder is a powder composed of particles having an average particle diameter of 1.0 to 50 pm.

7. The outer periphery-coated honeycomb structure (1) according to any one of claims 1 to 6, wherein the outer-peripheral coating layer (6) has a thermal expansion coefficient of 0.8 ∼ 3.2 x 10⁻⁶/K at 800°C.

8. A process for producing an outer periphery-coated honeycomb structure (1) according to any one of claims 1 to 6, which comprises a step of coating an outer periphery-coating material on the outer surface (5a) of a honeycomb structure (5) having porous partition walls (4) forming a plurality of divided cells (3), and drying the outer periphery-coating material to form an outer-peripheral coating layer (6);
the outer periphery-coating material containing
a filler containing a laser-coloring powder containing at least one member selected from the group consisting of a metal and a metal compound each developing a color which differs from the original color when irradiated with a laser, and a ceramic powder composed of a ceramic other than the material which constitutes the laser-coloring powder, wherein the ceramic powder is a powder containing particles of at least one kind of ceramic selected from the group consisting of cordierite, silicon nitride, alumina, mullite, zirconia, and zirconium phosphate, and
a dispersing medium,
the filler containing the laser-coloring powder in an amount of 20 to 400 parts by mass relative to 100 parts by mass of the ceramic powder;
the process further comprising the step of irradiating the outer-peripheral coating layer (6) with a laser to conduct marking.

9. The process for producing an outer periphery-coated honeycomb structure (1), set forth in Claim 8, wherein, in the step of conducting marking, the marking is made on the outer-peripheral coating layer (6) with a CO₂ laser.

## Patentansprüche

1. Außenumfang-beschichtete Wabenstruktur (1), die Folgendes umfasst:
eine Wabenstruktur (5) mit porösen Trennwänden (4), die eine Vielzahl von geteilten Zellen (3) bilden, und
eine Außenumfang-Beschichtungsschicht (6), die durch das Beschichten von zumindest einem Teil der Außenfläche (5a) der Wabenstruktur (5) mit einem Außenumfang-Beschichtungsmaterial gebildet wird;
wobei das Außenumfang-Beschichtungsmaterial Folgendes umfasst:
ein Füllmittel, enthaltend ein Laser-Färbepulver, das zumindest ein Element, das aus der aus einem Metall und einer Metallverbindung, die jeweils eine Farbe ausbilden, die sich bei Bestrahlung mit einem Laser von der ursprünglichen Farbe unterscheidet, bestehenden Gruppe ausgewählt ist, sowie ein Keramikpulver enthält, das aus einem anderen keramischen Material als jenem, das das Laser-Färbepulver ausbildet, besteht, wobei das Keramikpulver ein Pulver ist, das Teilchen von zumindest einer Art an Keramik enthält, die aus der aus Cordierit, Siliciumnitrid, Aluminiumoxid, Mullit, Zirkoniumoxid und Zirkoniumphosphat bestehenden Gruppe ausgewählt ist, und
ein Dispersionsmedium,
wobei das Füllmittel das Laser-Färbepulver in einer Menge von 20 bis 400 Masseteilen, bezogen auf 100 Masseteile des Keramikpulvers, enthält;
wobei die Außenumfang-beschichtete Wabenstruktur (1) eine Markierung aufweist, die mit einem Laser auf der Oberfläche der Außenumfang-Beschichtungsschicht (6) gebildet wurde.

2. Außenumfang-beschichtete Wabenstruktur (1) nach Anspruch 1, wobei das Laser-Färbepulver ein Pulver ist, das eine schwarze Farbe ausbildet, wenn es mit einem Laser bestrahlt wird.

3. Außenumfang-beschichtete Wabenstruktur (1) nach Anspruch 1 oder 2, wobei das Laser-Färbepulver ein Pulver ist, bei dem die Farbe einer Region, an der das Laser-Färbepulver vorhanden ist, sich in eine Farbe verändert, die eine Helligkeit von 0 bis 60 % aufweist, wenn sie mit einem Laser bestrahlt wird.

4. Außenumfang-beschichtete Wabenstruktur (1) nach einem der Ansprüche 1 bis 3, wobei das Laser-Färbepulver ein Pulver ist, das Teilchen enthält, die zumindest ein Element, das aus der aus Siliciumcarbid, Silicium, Titandioxid und Aluminiumnitrid bestehenden Gruppe ausgewählt ist, enthalten.

5. Außenumfang-beschichtete Wabenstruktur (1) nach einem der Ansprüche 1 bis 4, die Kieselsol als anorganisches Bindemittel enthält.

6. Außenumfang-beschichtete Wabenstruktur (1) nach einem der Ansprüche 1 bis 5, wobei das Laser-Färbepulver ein Pulver ist, das aus Teilchen mit einem mittleren Teilchendurchmesser von 1,0 bis 50 µm besteht.

7. Außenumfang-beschichtete Wabenstruktur (1) nach einem der Ansprüche 1 bis 6, wobei die Außenumfang-Beschichtungsschicht (6) einen Wärmeausdehnungskoeffizienten von 0,8 ∼ 3,2 x 10⁻⁶/K bei 800 °C aufweist.

8. Verfahren zur Herstellung einer Außenumfang-beschichteten Wabenstruktur (1) nach einem der Ansprüche 1 bis 6, das einen Schritt des Beschichtens der Außenfläche (5a) einer Wabenstruktur (5) mit porösen Trennwänden (4), die eine Vielzahl von geteilten Zellen (3) bilden, mit einem Außenumfang-Beschichtungsmaterial und des Trocknens des Außenumfang-Beschichtungsmaterials, um eine Außenumfang-Beschichtungsschicht (6) zu bilden, umfasst;
wobei das Außenumfang-Beschichtungsmaterial Folgendes umfasst:
ein Füllmittel, enthaltend ein Laser-Färbepulver, das zumindest ein Element, das aus der aus einem Metall und einer Metallverbindung, die jeweils eine Farbe ausbilden, die sich bei Bestrahlung mit einem Laser von der ursprünglichen Farbe unterscheidet, bestehenden Gruppe ausgewählt ist, enthält, sowie ein Keramikpulver, das aus einem anderen keramischen Material als jenem, das das Laser-Färbepulver ausmacht, besteht, wobei das Keramikpulver ein Pulver ist, das Teilchen von zumindest einer Art an Keramik enthält, die aus der aus Cordierit, Siliciumnitrid, Aluminiumoxid, Mullit, Zirkoniumoxid und Zirkoniumphosphat bestehenden Gruppe ausgewählt ist, und
ein Dispersionsmedium,
wobei das Füllmittel das Laser-Färbepulver in einer Menge von 20 bis 400 Masseteilen, bezogen auf 100 Masseteile des Keramikpulvers, enthält;
wobei das Verfahren weiters den Schritt des Bestrahlens der Außenumfang-Beschichtungsschicht (6) mit einem Laser, um eine Markierung durchzuführen, umfasst.

9. Verfahren zur Herstellung einer Außenumfang-beschichteten Wabenstruktur (1) nach Anspruch 8, wobei im Schritt der Durchführung der Markierung die Markierung auf der Außenumfang-Beschichtungsschicht (6) mit einem CO₂-Laser erfolgt.

## Revendications

1. Structure en nid d'abeille à revêtement périphérique extérieur (1) comprenant
une structure en nid d'abeille (5) ayant des cloisons de séparation poreuses (4) formant une pluralité de cellules divisées (3), et
une couche de revêtement périphérique extérieur (6) formée par application d'un matériau de revêtement périphérique extérieur sur au moins une partie de la surface extérieure (5a) de la structure en nid d'abeille (5) ;
le matériau de revêtement périphérique extérieur contenant
une charge contenant une poudre à coloration laser contenant au moins un élément choisi dans le groupe constitué d'un métal et d'un composé métallique développant chacun une couleur qui diffère de la couleur d'origine lorsqu'ils sont irradiés avec un laser, et une poudre céramique composée d'une céramique autre que le matériau qui constitue la poudre à coloration laser, dans lequel la poudre céramique est une poudre contenant des particules d'au moins une sorte de céramique choisie dans le groupe constitué de cordiérite, de nitrure de silicium, d'alumine, de mullite, de zircone et de phosphate de zirconium, et
un milieu de dispersion,
la charge contenant la poudre à coloration laser dans une quantité de 20 à 400 parties en masse pour 100 parties en masse de la poudre céramique ;
la structure en nid d'abeille à revêtement périphérique extérieur (1) présentant un marquage formé avec un laser sur la surface de la couche de revêtement périphérique extérieur (6).

2. Structure en nid d'abeille à revêtement périphérique extérieur (1) selon la revendication 1, dans laquelle la poudre à coloration laser est une poudre développant une couleur noire lorsqu'elle est irradiée avec un laser.

3. Structure en nid d'abeille à revêtement périphérique extérieur (1) selon la revendication 1 ou 2, dans laquelle la poudre à coloration laser est une poudre pour laquelle la couleur d'une région où existe la poudre à coloration laser se transforme en une couleur ayant une luminosité de 0 à 60 % lorsqu'elle est irradiée avec un laser.

4. Structure en nid d'abeille à revêtement périphérique extérieur (1) selon l'une quelconque des revendications 1 à 3, dans laquelle la poudre à coloration laser est une poudre contenant des particules contenant au moins un élément choisi dans le groupe constitué de carbure de silicium, de silicium, de dioxyde de titane et de nitrure d'aluminium.

5. Structure en nid d'abeille à revêtement périphérique extérieur (1) selon l'une quelconque des revendications 1 à 4, qui contient de la silice sublimée en tant que liant inorganique.

6. Structure en nid d'abeille à revêtement périphérique extérieur (1) selon l'une quelconque des revendications 1 à 5, dans laquelle la poudre à coloration laser est une poudre composée de particules ayant un diamètre de particule moyen de 1,0 à 50 pm.

7. Structure en nid d'abeille à revêtement périphérique extérieur (1) selon l'une quelconque des revendications 1 à 6, dans laquelle la couche de revêtement périphérique extérieur (6) a un coefficient de dilatation thermique de 0,8 ∼ 3,2 x 10⁻⁶/K à 800° C.

8. Procédé de fabrication d'une structure en nid d'abeille à revêtement périphérique extérieur (1) selon l'une quelconque des revendications 1 à 6, qui comprend une étape d'application d'un matériau de revêtement périphérique extérieur sur la surface extérieure (5a) d'une structure en nid d'abeille (5) ayant des cloisons de séparation poreuses (4) formant une pluralité de cellules divisées (3), et de séchage du matériau de revêtement périphérique extérieur pour former une couche de revêtement périphérique extérieur (6) ;
le matériau de revêtement périphérique extérieur contenant
une charge contenant une poudre à coloration laser contenant au moins un élément choisi dans le groupe constitué d'un métal et d'un composé métallique développant chacun une couleur qui diffère de la couleur d'origine lorsqu'ils sont irradiés avec un laser, et une poudre céramique composée d'une céramique autre que le matériau qui constitue la poudre à coloration laser, dans lequel la poudre céramique est une poudre contenant des particules d'au moins une sorte de céramique choisie dans le groupe constitué de cordiérite, de nitrure de silicium, d'alumine, de mullite, de zircone et de phosphate de zirconium, et
un milieu de dispersion,
la charge contenant la poudre à coloration laser dans une quantité de 20 à 400 parties en masse pour 100 parties en masse de la poudre céramique ;
le procédé comprenant en outre l'étape d'irradiation de la couche de revêtement périphérique extérieur (6) avec un laser pour réaliser le marquage.

9. Procédé de fabrication d'une structure en nid d'abeille à revêtement périphérique extérieur (1), selon la revendication 8, dans lequel, dans l'étape de réalisation du marquage, le marquage est effectué sur la couche de revêtement périphérique extérieur (6) avec un laser à CO₂.
